Europäisches Patentamt

European Patent Office

Office européen des brevets

(11) Numéro de publication: **0 381 565**
**A1**

# (12) DEMANDE DE BREVET EUROPEEN

(21) Numéro de dépôt: 90400231.8

(22) Date de dépôt: 26.01.90

(51) Int. Cl.5: **H04L 5/14**

(30) Priorité: **01.02.89 FR 8901272**

(43) Date de publication de la demande:
**08.08.90 Bulletin 90/32**

(84) Etats contractants désignés:
**ES GB IT**

(71) Demandeur: **FAIVELEY TRANSPORT**
**93 rue du Docteur Bauer**
**F-93407 Saint-Ouen Cédex(FR)**

(72) Inventeur: **Demarais, Gérard**
**6 Rue Pierre Mestre**
**F-95230 Soisy-sous-Montmorency(FR)**

(74) Mandataire: **Bouju, André**
**Cabinet Bouju 38 avenue de la Grande**
**Armée**
**F-75017 Paris(FR)**

(54) **Procédé de transmission d'informations ou d'ordres et dispositif pour sa mise en oeuvre.**

(57) Le procédé de transmission d'informations ou d'ordres, en mode duplex alterné entre un premier port (2) relié à une première paire de lignes de transmission, et un second port (3) relié à une seconde paire de lignes de transmission, comprend : une étape (A) de détection et de traitement d'informations à l'entrée d'un quelconque desdits ports, désigné alors comme port d'entrée, l'autre port étant désigné comme port de sortie, suivie d'une étape (B) de blocage de toute transmission de signaux éventuels issus du port de sortie vers le port d'entrée, une étape (C) de transmission desdites informations du port d'entrée vers le port de sortie, tant que des informations sont détectées en entrée du port d'entrée, et suivie dans le cas contraire, d'une étape (D) blocage de transmission de tous signaux éventuels issus du port d'entrée vers le port de sortie, conduisant de nouveau à l'étape (A).

Les informations présentées à l'un quelconque desdits ports sont sous la forme d'une modulation en amplitude d'un signal porteur alternatif de fréquence porteuse prédéterminée, et l'étape (A) de détection et de traitement comporte une étape d'identification de la fréquence porteuse prédéterminée et une étape d'extraction d'un signal utile représentatif desdites informations à transmettre.

Utilisation dans les systèmes de commande d'ouverture de portes à sécurité intrinsèque, notamment dans le matériel de transport ferroviaire.

FIG.1

## Procédé de transmission d'informations ou d'ordres et dispositif pour sa mise en oeuvre

La présente invention concerne un procédé de transmission d'informations ou d'ordres en mode duplex alterné. Elle vise également un dispositif de transmission d'informations en mode duplex alterné mettant en oeuvre ce procédé et son application à la transmission d'informations d'ouverture et d'ordres de fermeture des portes d'une rame de transport ferroviaire.

Dans une rame de transport ferroviaire, des ordres d'ouverture de portes et des informations de fermeture de celles-ci doivent être transmis de voiture en voiture vers le poste de conduite aux moyens de paires de lignes de transmission, en garantissant une sécurité maximale des voyageurs. Il s'agit notamment d'empêcher toute ouverture intempestive des portes d'une voiture lorsque la rame est en déplacement.

On connaît déjà des systèmes de transmission d'ordres d'ouvertures et de fermeture des portes dont la sécurité est basée sur le principe de la redondance, utilisant des relais électromécaniques et mettant en oeuvre, pour la transmission d'un signal au moins deux paires de lignes de transmission. Bien que les techniques visant à empêcher toute ouverture intempestive des portes aient été poussées très loin, l'utilisation de relais électromécaniques peut conduire à la transmission d'informations erronées. Dans le cas particulier d'un contrôle de fermeture des portes d'une voiture équipée de huit portes comportant chacune deux vantaux, ces sytèmes de transmission comprennent un relais de récapitulation, d'un coût élevé, qui contrôle les seize contacts, reliés en série, de fermeture des seize vantaux de la voiture considérée. Si l'un des contacts présente un court-circuit accidentel, le train peut partir alors qu'une porte est ouverte ou mal fermée, ce qui présente un risque pour les voyageurs.

On connaît aussi des systèmes de transmission mettant en oeuvre des transpondeurs téléphoniques. Mais ceux-ci ne permettent pas de dérivation locale, ne sont pas adaptés en volume, en coût et en robustesse aux applications ferroviaires et présentent une bande passante limitée qui ne permet pas la transmission des signaux usuels en matériel ferroviaire. Par ailleurs, ils ne présentent aucune sécurité intrinsèque et le faible niveau de puissance, de l'ordre de 1m W, rend les lignes de transmission équipées de ces transpondeurs hautement sensibles aux perturbations parasites, du fait de leurs niveaux de tension et de courant incompatibles avec l'environnement ferroviaire usuel, pour lequel un niveau de puissance de transmission de l'ordre de 2W est recommandé.

On connait des circuits récepteurs bidirectionnels qui peuvent transmettre des signaux numériques dans les deux directions dans lesquels un signal de commande peut inhiber temporairement la transmission en sens opposé. De tels circuits sont décrits dans les documents US-A-4 154 978, US-A-4 577 327 et EP-A-0025483. On obtient de cette manière une sécurité de transmission satisfaisante. Cependant cette sécurité n'est possible avec ces systèmes que pour des signaux numériques ce qui limite leur intérêt dans un certain nombre d'utilisations.

Dans le cas particulier de la transmission d'informations et d'ordres pour les portes de rames ferroviaires, on utilise des signaux analogiques modulés faisant donc intervenir une énergie, cette transmission d'énergie assurant la sécurité maximum car l'absence de cette énergie est interprétée de façon directe comme une absence d'ordre ou d'information. La technique antérieure ne permet donc pas de résoudre avec le maximum d'efficacité la sécurité de transmission de ces signaux analogiques.

Le but de l'invention est de remédier à ces inconvénients en proposant un procédé de transmission d'informations ou d'ordres en mode duplex alterné entre un premier port relié à une première paire de lignes de transmission et un second port relié à une seconde paire de lignes de tranmission.

L'invention propose ainsi un procédé de transmission comprenant :

A) une étape de détection et de traitement d'informations à l'entrée d'un quelconque desdits ports, désigné alors comme port d'entrée, l'autre port étant désigné comme porte de sortie, suivie

B) d'une étape de blocage de toute transmission de signaux éventuels issus du port de sortie vers le port d'entrée,

C) une étape de transmission desdites informations du port d'entrée vers le port de sortie, tant que des informations sont détectées en entrée du port d'entrée, et suivie dans le cas contraire,

D) d'une étape de blocage de transmission de tous signaux d'entrée vers le port de sortie, conduisant de nouveau à l'étape A).

Selon l'invention, ce procédé de transmission est caractérisé en ce que les informations présentées à l'un quelconque desdits ports sont sous la forme d'une modulation en amplitude d'un signal porteur alternatif de fréquence porteuse prédéterminée, et en ce que l'étape A) de détection et de traitement comporte une étape d'identification de la fréquence porteuse prédéterminée et une étape d'extraction d'un signal utile représentatif desdits informations à transmettre.

On dispose ainsi d'un procédé de transmission qui, grâce à l'étape de blocage de transmission dans le sens non sélectionné et l'étape d'ouverture d'un chemin de transmission dans le sens sélectionné, assure un haut niveau de sécurité de transmission. En effet, toute transmission intempestive dans le sens non sélectionné est ainsi interdite. Le verrouillage de la transmission est maintenu jusqu'à ce qu'il y ait disparition du signal porteur à l'entrée du port concerné. Le procédé est conçu pour la transmission de signaux analogiques, ce qui le rend intéressant pour de nombreuses applications comme la transmission d'informations et d'ordres pour les portes de rames ferroviaires.

Suivant une version particulière de l'invention, le signal utile est un signal logique, le signal porteur étant modulé de sorte qu'à chaque valeur 0 ou 1 du signal logique correspond un niveau d'amplitude prédéterminé du signal porteur et l'étape de transmission D) est commandée par le résultat d'une opération logique prédéterminée sur au moins une variable logique externe prédéterminée.

Il est ainsi possible de contrôler localement la transmission d'informations d'un port vers l'autre port et de prendre ainsi en compte des informations transmises.

Suivant une autre version particulière de l'invention, lesdites étapes A) à D) sont inhibées séléctivement par la mise en oeuvre éventuelle de moyens de contrôle local prédéterminés et remplacées alors par les étapes suivantes :

E) une étape de sélection de l'un desdits premier et second ports ou des deux ensembles, comme ports de sorties, suivie

F) d'une étape de transmission d'une information prédéterminée par lesdits ports sélectionnés, interrompue sélectivement par action extérieure sur des moyens d'interruption, et suivie alors

G) d'une étape de blocage sélectif de toute transmission vers le ou lesdits ports sélectionnés dont le blocage a été demandé, conduisant à une nouvelle étape E) si lesdits moyens de contrôle local sont toujours activés, ou bien à ladite étape A, dans le cas contraire.

Avec cette version du procédé selon l'invention, un opérateur peut intervenir localement pour émettre un ordre ou une information de façon sélective au choix à partir de l'un ou l'autre desdits premier et second ports, tout en bénéficiant des étapes de blocage et d'ouverture de chemin de transmission.

Suivant un autre aspect de l'invention, le dispositif de transmission d'informations en mode duplex alterné entre un premier et un second ports mettant en oeuvre le procédé selon l'invention, comprend des moyens pour détecter et traiter des informations à l'entrée de l'un quelconque desdits ports, désigné alors comme port d'entrée, l'autre port étant désigné comme port de sortie, des moyens pour bloquer sélectivement toute transmission de signaux éventuels issus du port de sortie vers le port d'entrée, reliés aux moyens de détection et de traitement, des moyens pour ouvrir sélectivement un chemin de transmission prédéterminé dudit port d'entrée vers ledit port de sortie, reliés auxdits moyens de blocage, des moyens pour transmettre lesdites informations vers ledit port de sortie, reliés d'une part auxdits moyens d'extraction et auxdits moyens d'ouverture, et d'autre part audit port de sortie, lesdits moyens de détection et d'extraction coopérant avec lesdits moyens de blocage et d'ouverture sélectifs pour n'autoriser à tout instant qu'un sens de transmission entre lesdits premier et second ports. Les moyens de détection et de traitement comprennent alors des moyens d'identification d'une fréquence porteuse prédéterminée et des moyens pour extraire d'un signal alternatif à ladite fréquence porteuse prédéterminée en entrée du port d'entrée, un signal utile de modulation représentatif des informations à transmettre, chacun desdits ports étant relié à une paire de lignes de transmission.

Ainsi, le dispositif de transmission conforme à l'invention permet la définition d'un chemin privilégié de transmission d'une information ou d'un ordre d'un port vers l'autre avec un haut niveau de sécurité puisqu'aucun signal intempestif ne peut accéder aux moyens de transmission, du fait des deux barrières fonctionnelles créées d'une part par les moyens de blocage sélectif et d'autre part, par les moyens d'ouverture sélective. On obtient ainsi un relayage unidirectionnel des informations ou ordres licites transmis avec régénération des signaux porteurs grâce aux moyens de transmission.

Selon une version avantageuse de l'invention, le dispositif de transmission présente une disposition symétrique desdits moyens précités vis à vis desdits premier et second ports, lesdits moyens précités se répartissant en deux premier et second groupes de moyens identiques attachés respectivement auxdits premier et second ports et comportant respectivement des premier et second moyens de détection reliés respectivement auxdits premier et second ports, des premiers et seconds moyens d'extraction reliés respectivement auxdits premiers et seconds moyens de détection, des premiers et seconds moyens pour bloquer sélectivement des informations en provenance du port opposé, des premiers et seconds moyens pour ouvrir sélectivement un chemin de transmission reliés, d'une part, respectivement auxdits premiers et seconds moyens d'extraction et, d'autre part, respectivement auxdits premiers et seconds moyens de blocage sélectif, et des premiers et seconds moyens pour transmettre des informations en provenance du port opposé, reliés d'une part respectivement auxdits premiers et seconds moyens de blocage et d'autre part, respectivement auxdits premier et second ports, lesdits premiers et seconds moyens d'ouverture sélective desdits premier et second groupes étant respectivement reliés auxdits seconds et premiers moyens de blocage sélectif desdits second et premier groupes et auxdits seconds et premiers moyens d'ouverture sélective desdits second et premier groupes.

La structure totalement symétrique du dispositif conforme à l'invention assure une parfaite bidirectionnalité du transmetteur ainsi obtenu et garantit un bon fonctionnement en mode duplex alterné. Par ailleurs, les liaisons spécifiques des premiers et seconds moyens d'ouverture sélective avec les seconds et premiers moyens de blocage sélectif conduisent à une disposition de type bascule qui permet précisément la mise en place d'un chemin de transmission privilégié selon le sens de transmission en cours.

Suivant une première version préférée de l'invention, le dispositif de transmission comprend en outre des moyens pour commander la transmission d'informations du port d'entrée vers le port de sortie via les moyens d'ouverture et les moyens de blocage, en fonction de l'état d'au moins une variable extérieure prédéterminée appliquée en entrée desdits moyens de commande.

Il est ainsi possible de commander la transmission d'informations en fonction de données locales et de prendre en compte une situation spécifique au site d'installation du dispositif conforme à l'invention.

Suivant une seconde version préférée de l'invention, le dispositif de transmission comprend en outre
- des moyens de contrôle local, reliés respectivement auxdits premiers et seconds moyens d'ouverture sélective et auxdits premiers et seconds moyens de blocage sélectif, pour transmettre sélectivement une information prédéterminée vers au moins un desdits ports, en inhibant simultanément toute transmission d'information d'un desdits ports vers l'autre port,
- des premiers et seconds moyens de contrôle de lignes, reliés, d'une part respectivement auxdits premiers et seconds moyens d'ouverture sélective, synchronisés avec lesdits moyens de contrôle local,
- des premiers et seconds moyens de sélection de port, reliés d'une part auxdits moyens de contrôle local, et d'autre part, respectivement auxdits premiers et seconds moyens de blocage sélectif et auxdits premiers et seconds moyens d'ouverture sélective, et
- des premiers et seconds moyens d'interruption, reliés, d'une part, respectivement auxdits premiers et seconds moyens de contrôle de ligne, et d'autre part, auxdits premiers et seconds moyens de blocage sélectif.

Cette version préférée de l'invention permet à un opérateur d'agir directement à partir du dispositif de transmission pour émettre, à partir de l'un desdits ports, une information.

L'opérateur sélectionne le port d'émission par action sur les moyens de sélection de port concernés et peut interrompre à tout moment la transmission par action sur les moyens d'interruption correspondants.

Suivant encore un autre aspect de l'invention, le système de transmission d'informations ou d'ordres dans une rame de transport ferroviaire constituée de plusieurs voitures, mettant en oeuvre des dispositifs de transmission conformes à l'invention, comprenant dans chaque voiture
- une première paire de lignes de transmission, pour transmettre de proche en proche, un premier ordre d'ouverture d'un premier groupe de portes (en voiture),
- une deuxième paire de lignes de transmission, pour transmettre de proche en proche, un second ordre d'ouverture d'un second groupe de portes,
- une troisième paire de lignes de transmission, pour transmettre de proche en proche, une information de fermeture des portes de voitures de la rames situées dans une direction prédéterminée par rapport à ladite voiture, comprend en outre,
- des premier et second dispositifs de transmission selon la seconde version préférée de l'invention, dont lesdits premiers ports sont reliés respectivement d'une part,à une première extrémité de ladite première paire de lignes et à une première extrémité de ladite seconde paire de lignes, et d'autre part, à des moyens d'ouverture de porte associés à chaque porte appartenant respectivement auxdits premier et second groupes de portes, et dont lesdits seconds ports sont reliés respectivement à des secondes extrémités de première et seconde paires de lignes de transmission de la voiture adjacente à ladite voiture, du côté desdits seconds ports,
lesdites variables extérieures prédéterminées commandant ladite transmission d'informations comprenant une première variable indicative de la fermeture des portes dudit premier groupe de portes et une seconde variable indicative de la fermeture des portes dudit second groupe de portes, et étant fournies auxdits moyens de commande, respectivement par un premier et un second groupes de capteurs de fermeture de porte reliés en série.

La mise en oeuvre des dispositifs de transmission conformes à l'invention au sein d'un système de transmission d'informations ou d'ondes permet ainsi, d'une part, d'éviter l'emploi de dispositifs électromécaniques ou de transpondeurss téléphoniques, et d'autre part, de disposer de moyens de contrôle local dans chaque voiture.

Les dispositifs de transmission employés étant totalement symétriques et bidirectionnels, le système de transmission conforme à l'invention peut être aisément reconfiguré en fonction de la composition de la rame et quelque soit la position relative du poste de pilotage par rapport à chaque voiture.

D'autres particularités et avantages apparaîtront encore dans la description ci-après.

Aux dessins annexés, donnés à titre d'exemples non limitatifs,

- la figure 1 est une vue schématique du dispositif de transmission symétrique conforme à l'invention,

- la figure 2 est une vue schématique d'une forme de réalisation particulière du dispositif conforme à l'invention, dans laquelle des variables extérieures sont prises en compte,

- la figure 3 est une vue schématique d'une autre forme de réalisation particulière du dispositif conforme à l'invention, permettant la prise en compte d'ordres locaux,

- la figure 4 est une vue schématique d'un système de transmission d'ordres et d'informations, au sein d'une rame de transport ferroviaire, mettant en oeuvre plusieurs dispositifs conformes à l'invention et trois paires de lignes,

- la figure 5 est une vue schématique d'une autre configuration de système mettant en oeuvre deux paires de lignes.

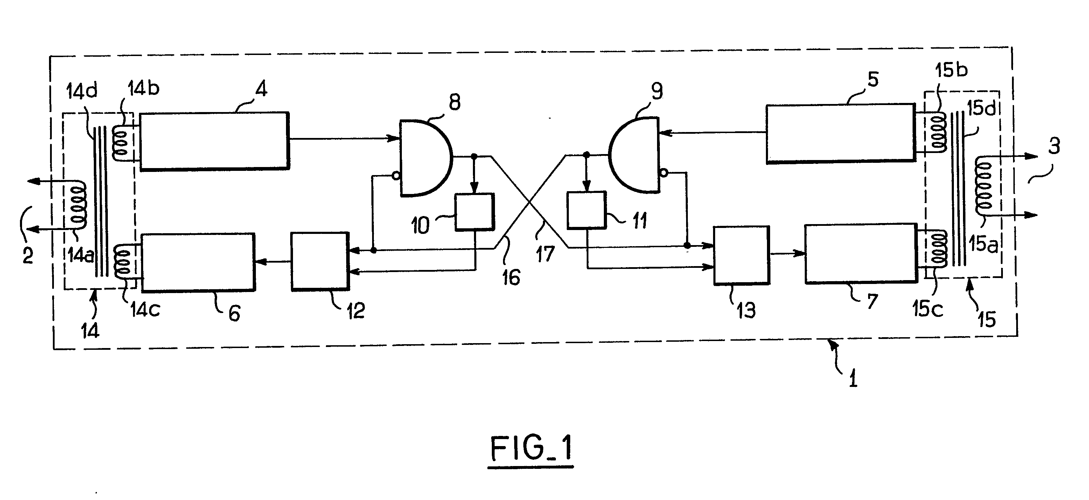

Le principe de base du dispositif de transmission d'informations ou d'ordres conformes à l'invention est illustré schématiquement sur la figure 1.

Le dispositif de transmission 1 présente une structure symétrique. Ses deux ports 2, 3 doivent être en mesure d'être utilisés soit en entrée, soit en sortie. Ils peuvent par exemple être reliés à des lignes de transmission ou bien directement à un dispositif émetteur ou à un dispositif récepteur. Le dispositif de transmission a pour fonction d'assurer la régénération des signaux transmis et éventuellement la modification de ces signaux en fonction de commandes locales.

Chacun d'entre eux est relié à un enroulement primaire 14a, 14b d'un transformateur 14, 15 comportant un circuit magnétique 14d, 15d et deux enroulements secondaires 14b, 14c ; 15b, 15c.

Pour chaque transformateur, un enroulement secondaire 14b, 15b est relié à l'entrée d'un module de détection et d'extraction de signal 4, 5, tandis que l'autre enroulement secondaire 14c, 15c est relié à la sortie d'un module d'oscillation et d'amplification 6, 7.

Le coeur du dispositif conforme à l'invention est constitué d'un basculeur comportant deux portes logiques ET, d'ouverture sélective 8, 9, à deux entrées dont une inversée, bouclées entre elles suivant la technique connue des bascules séquentielles.

Une première entrée de chacune des portes logiques 8, 9 d'ouverture est reliée à la sortie respective de chaque module d'identification et d'extraction 4, 5, tandis que l'autre entrée inversée est reliée d'une part à la sortie de la porte logique d'ouverture sélective opposée 9, 8 et, d'autre part, à une première entrée d'une porte logique ET de blocage sélectif 12, 13 à deux entrées, par des liaisons respectives 16, 17. La sortie de chaque porte logique d'ouverture sélective 8, 9 est respectivement reliée d'une part à la deuxième entrée de chaque porte logique de blocage sélectif 12, 13, via des inverseurs logiques 10, 11, et d'autre part, à la deuxième entrée de la porte logique d'ouverture sélective opposée 9, 8. Ces portes logiques 8, 9 peuvent être fabriquées suivant la technologie connue dite, de report à plat, en utilisant des composants pour montage, en surface CMS, utilisés également en technologie hybride.

Les informations ou ordres transmis sur des paires de ligne reliées aux ports 2, 3 du dispositif conforme à l'invention sont en pratique des signaux alternatifs de fréquence comprise dans une bande allant de 15 kHz à 30 kHz, à titre d'exemple, et modulés en amplitude par des signaux de commande ou d'information.

Une fonction essentielle des transformateurs 14, 15 du dispositif 1 conforme à l'invention couplés aux modules d'identification et d'extraction 4, 5 est d'assurer le bouclage des lignes reliées au port, de fournir l'adaptation d'impédance requise et de permettre qu'entre deux dispositifs selon l'invention, la paire de lignes soit flottante, les transformateurs assurant le couplage entre les paires de lignes successivess.

On va maintenant expliquer le principe général de fonctionnement du dispositif de transmission d'informations ou d'ordres en mode duplex alterné, qui illustre en même temps le procédé selon l'invention, en référence à la figure 1.

Supposons qu'un signal porteur d'informations apparaisse sur le port 2. Le transformateur 14 va présenter par couplage magnétique une image électrique du signal aux bornes de son enroulement secondaire 14b, ainsi d'ailleurs qu'aux bornes de son autre enroulement secondaire 14c.

Le module de détection et d'extraction de signal 4, relié en entrée à l'enroulement secondaire 14b, va identifier la fréquence porteuse prédéterminée, extraire le signal utile porteur et le mettre en forme. On peut considérer, à titre d'exemple, le cas d'une commande logique concrétisée par un niveau logique 1 associé à un niveau d'amplitude haute prédéterminé. Le module d'identification et d'extraction délivre alors en sortie un signal logique 1 qui est appliqué au basculeur constitué par les deux portes logiques 8, 9.

Les conditions initiales du basculeur sont les suivantes :
- premières entrées respectives des portes logiques 8, 9 : 0
- secondes entrées avant inversion : 0
- sorties : 0

Après application du niveau logique 1 à la première entrée de la porte logique 8, la sortie de celle-ci commute du niveau logique initial 0 au niveau logique 1. Il s'en suit, d'une part, l'application d'un niveau logique 1 sur une première entrée de la seconde porte logique de blocage sélectif 13, dont la deuxième entrée était initialement aussi au niveau logique 1, et d'autre part, l'application d'un niveau logique 0 sur une deuxième entrée de la première porte de blocage sélectif 12, via l'inverseur logique 10, la première entrée de la première porte de blocage sélectif 12 alors au niveau logique de sortie 0 tandis que la seconde porte de blocage sélectif présente un niveau logique de sortie 1. Ainsi, tout accès au premier module d'oscillation et d'amplification 6 est temporairement interdit : il y a blocage de transmission du port 3 vers le port 2. En outre, la sortie de niveau logique 1 de la porte logique 8 est aussi appliquée à l'entrée inversée de la deuxième porte logique d'ouverture sélective 9.

Cela se traduit par un niveau logique 0 en sortie de la porte logique 9, qui était d'ailleurs déjà présent initialement. Mais, maintenant, le niveau logique 0 est imposé par la porte logique opposée 8 et non pas par l'absence de signal en sortie du second module d'identification et d'extraction 5.

Le niveau logique 0 est répercuté, d'une part, sur l'entrée inversée de la première porte logique d'ouverture sélective 8, sur la première entrée de la première porte logique de blocage sélectif 12, et, d'autre part, en entrée du second inverseur logique 11 qui présente alors un niveau logique 1 sur la deuxième entrée de la seconde porte logique de blocage sélectif 13.

Par conséquent, un chemin de transmission a été ouvert :
port 2→ enroulement 14a→ enroulement 14b→ porte logique 8 →porte logique 9→module d'oscillation et d'amplification 7 →enroulement 15c→enroulement 15a→port 3
tandis que toute transmission dans l'autre sens est bloquée grâce aux portes logiques suivantes :
. seconde porte logique d'ouverture sélective 9
. première porte logique de blocage sélectif 12.

Si, pour quelque raison que ce soit, un signal porteur apparaît en entrée du port 3 et est identifié et traité par le second module d'identification et d'extraction 5 qui délivre alors un signal logique 1 sur la première entrée de la seconde porte logique d'ouverture sélective 1, celle-ci maintiendra le blocage de transmission tant que la transmission licite du port 2 vers le port 3 est en cours.

Ensuite, la seconde porte logique de blocage sélectif 13 transmet un niveau logique 1 au module 7 qui assure d'une part, la conversion du niveau logique 1 en signal alternatif porteur (oscillation), et, d'autre part, l'amplification de ce signal avant transfert vers le port 3 via le second transformateur de couplage 15.

Ceci assure un haut niveau de sécurité du dispositif conforme à l'invention. En outre, si la seconde porte logique d'ouverture sélective 9 devient défaillante et transmet indûment un niveau logique 1, la première porte logique de blocage sélectif 12 assure un ultime barrage à la transmission de l'information erronnée vers le port 2, tant que la transmission du port 2 vers le port 3 n'est pas achevée.

Bien sûr, l'explication qui vient d'être donnée vaut aussi pour l'autre sens de transmission, le dispositif conforme à l'invention étant entièrement symétrique.

Dans une autre forme de réalisation, la transmission d'un ordre ou d'une information d'un port vers l'autre peut être contrôlée par des moyens de commande sensibles à l'état d'au moins une variable extérieure.

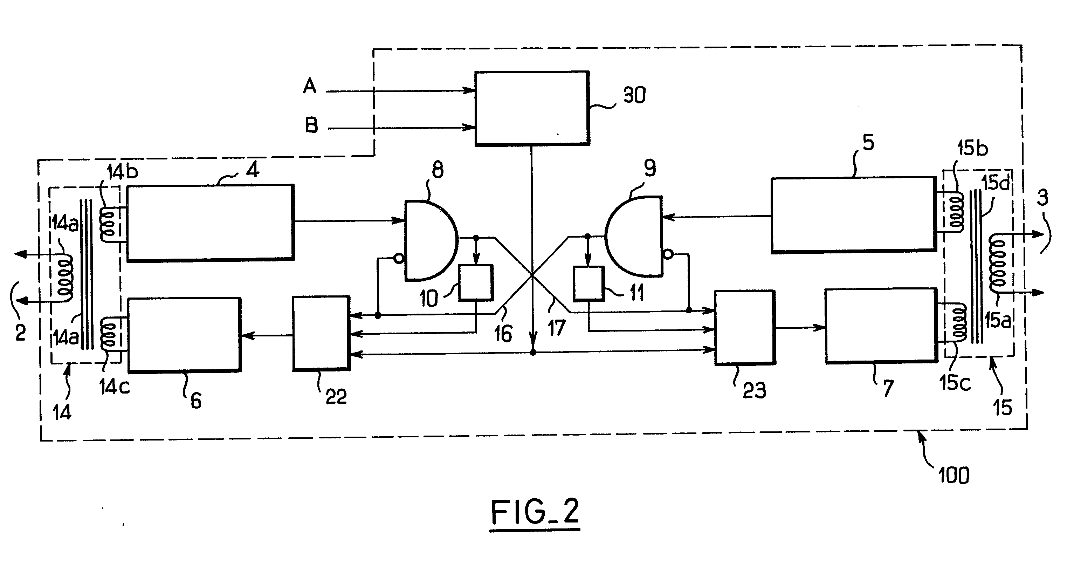

La figure 2 illustre cette forme de réalisation dans laquelle deux variables logiques A, B, extérieures au dispositif 100 conforme à l'invention, sont appliquées à une porte logique ET 30 dont la sortie est reliée respectivement à une troisième entrée d'une première et d'une seconde portes logiques de blocage sélectif 22, 23. Le reste du dispositif 100 est identique au dispositif 1 décrit ci-dessus.

La porte logique de commande 30 permet de bloquer une transmission en cours dans un sens ou dans l'autre si l'une au moins des deux variables logiques A, B présente un niveau logique 0. Ainsi, si un signal équivalent à un niveau logique 1 est présent au port 2, la non satisfaction de la condition A, B = 1, 1 se traduit par la transmission d'un signal équivalent à un niveau logique 0 sur le port 3. Il en est de même dans le cas d'une transmission du port 3 vers le port 2.

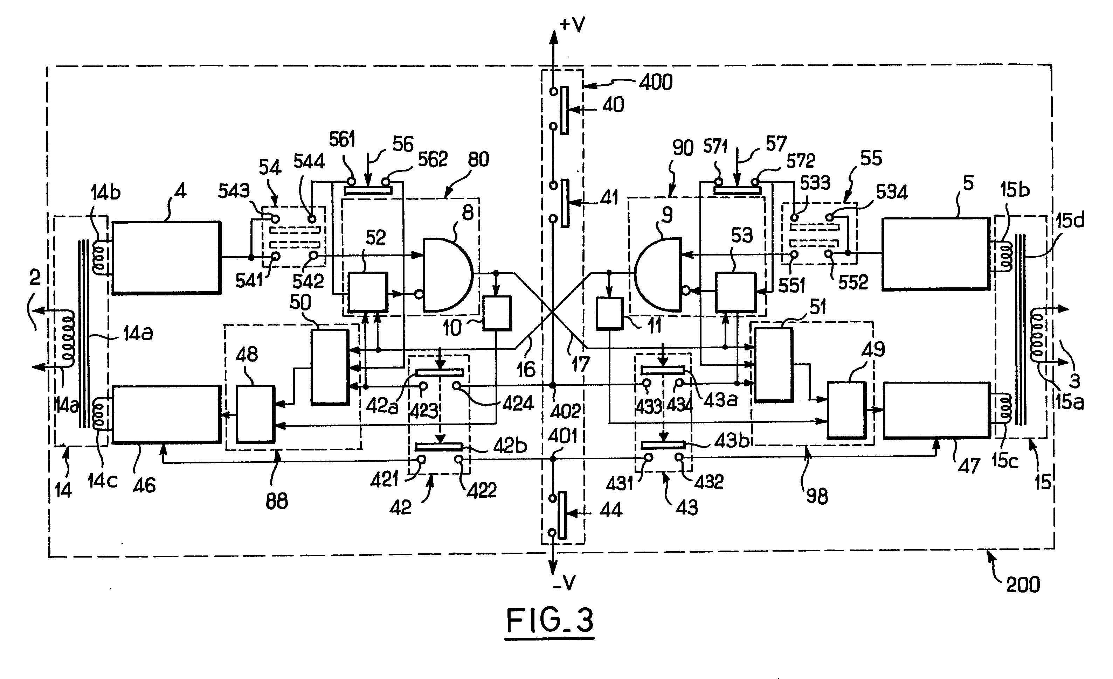

Une autre version avantageuse du dispositif conforme à l'invention est illustrée par la figure 3.

Cette version de l'invention a été conçue pour permettre une intervention locale d'un opérateur sur les ordres transmis quel que soit le sens de transmission.

Les éléments du dispositif avec contrôle local 200 communs au premier dispositif selon l'invention illustré par la figure 1 sont :
les ports 2, 3
les transformateurs de couplage 14, 15
les première et seconde portes logiques d'ouverture sélective 8, 9

les modules d'identification et d'extraction 4, 5.

Dans cette version de l'invention, en limitant dans un premier temps la description du dispositif 200 à la première partie gauche pour des raisons de symétrie, la sortie du module d'identification et d'extraction 4 est reliée à un premier commutateur de contrôle de ligne 54 comportant quatre pôles 541, 542, 543, 544 et présentant deux états stables :

- un premier état, dans lequel les pôles 541 et 542 sont reliés électriquement et les deux pôles 543 et 544 sont en circuit ouvert,

- un second état, dans lequel les pôles 543 et 544 sont reliés électriquement et les deux pôles 541 et 542 sont en circuit ouvert.

Les deux premier et troisième pôles 541 et 543 sont interconnectés et reliés à la sortie du module 4.

Le second pôle 542 du commutateur 54 est relié à la première entrée de la première porte logique ET d'ouverture sélective 8, tandis que le quatrième pôle 544 est relié, d'une part, à un premier pôle 561 d'un premier commutateur d'interruption 56 et d'autre part à une première entrée d'une première porte logique OU de contrôle 50 à deux entrées. Le second pôle 562 du premier commutateur d'interruption 56 est relié à une deuxième entrée d'une première porte logique OU de sélection 50 à trois entrées.

La première porte logique OU de contrôle 52 présente une deuxième entrée reliée d'une part, à une troisième entrée de la première porte logique OU de sélection 50 et, d'autre part, à un troisième pôle 423 d'un premier commutateur de sélection de port 42 à 4 pôles, et une troisième entrée reliée, d'une part, à une première entrée de la porte logique OU de sélection 50 et, d'autre part, à la sortie de la seconde porte logique d'ouverture sélective 9. La sortie de la première porte logique OU de contrôle 52 est reliée à la deuxième entrée inverseuse de la première porte logique d'ouverture sélective 8.

La première porte logique OU de contrôle a sa sortie reliée à une première entrée d'une première porte logique ET de blocage sélectif 48 à deux entrées dont la sortie est reliée à l'entrée du premier module d'oscillation et d'amplification 46, et dont la deuxième entrée est reliée à la sortie de la première porte logique ET d'ouverture sélective 8 via un inverseur logique 10.

Le premier commutateur de sélection de port 42 comporte 4 pôles 421, 422, 423, 424 et deux états stables possibles :
- dans le premier état,
les premier et second pôles 421, 422, d'une part, et les troisième et quatrième pôles 423, 424, d'autre part, sont en contact électrique ;
- dans le second état,

tout contact électrique est supprimé.

Le premier pôle 421 du premier commutateur de sélection de port 42 est relié au premier module d'oscillation et d'amplification 46. Le deuxième pôle 422 est relié, d'une part, à un premier pôle d'un commutateur de contrôle local bipolaire 44, et d'autre part, au premier pôle du deuxième commutateur de sélection de port 43 opposé et symétrique. Le quatrième pôle 424 du premier commutateur de sélection de port 42 est relié, d'une part, à un second pôle d'un premier commutateur de contrôle local 41 bipolaire, et d'autre part, au troisième pôle du deuxième commutateur de sélection de port 43 opposé et symétrique.

La combinaison de la porte logique OU de contrôle 52 et de la porte logique ET d'ouverture sélective 8 constitue les nouveaux moyens d'ouverture sélective 80 du dispositif 200 selon cette version de l'invention. Par ailleurs, la combinaison de la porte logique OU de sélection 50 et de la porte logique de blocage sélectif 48 constitue les nouveaux moyens de blocage sélectif 88.

Les moyens de contrôle local 400 du dispositif 200 selon cette version de l'invention, comprennent un commutateur de déplacement bipolaire 40 dont un premier pôle est relié à une source de tension continue de polarité positive +V,
- le premier commutateur de contrôle local 41 dont un premier pôle est relié au second pôle du commutateur de déplacement 40 et dont un second pôle est relié respectivement aux quatrième et troisième pôles 424, 433 des premier et second commutateurs de sélection de port 42, 43,
- le second commutateur de contrôle local 44, dont un premier pôle est relié respectivement aux deuxième et premier pôles 422, 431 des premier et second commutateurs de sélection de port 42, 43 et dont un second pôle est relié à une source de tension continue de polarité négative -V.

Les seconds moyens de contrôle de ligne (55 ; 551, 552, 553, 554), les seconds moyens d'interruption (57, 571, 572), les seconds moyens d'ouverture sélective (90 ; 9, 53), les seconds moyens de sélection de port (43 ; 431, 432, 433, 434), les seconds moyens de blocage sélectif (98 ; 51, 49) et les seconds modules d'oscillation et d'amplification 5 sont agencés exactement de la même façon que celle décrite pour le premier groupe de moyens, du fait de la symétrie du dispositif conforme à l'invention.

Par ailleurs, les premier et second commutateurs de contrôle de ligne 54, 55 présentent un fonctionnement parfaitement synchrone. Ainsi, lorsque les premier et second pôles 541, 542 du premier commutateur de contrôle de ligne 54 sont en contact électrique, les premier et second pôles 551, 552 du second commutateur de contrôle local 41, 44 sont aussi en synchronisme avec les premier et second commutateurs de contrôle de ligne 54, 55. Ainsi, les premier et second commutateurs de contrôle local 41, 44 sont en position fermée lorsque les premier et second commutateurs de contrôle de ligne 54, 55 sont en position "haute", à savoir, lorsque d'une part, les troisième et quatrième pôles 543, 544 du premier commutateur de contrôle de ligne 54, et d'autre part, les troisième et quatrième pôles 553, 554 du second commutateur de contrôle de ligne 55 sont en contact électrique.

Sur un plan pratique, les premier et second commutateurs de contrôle de ligne 54, 55 et les premier et second commutateurs de contrôle local 41, 44 sont mécaniquement solidaires et sont donc actionnés simultanément. Pour la clarté de l'exposé, le commutateur global, incluant les commutateurs de contrôle de ligne 54, 55 et les commutateurs de contrôle local, sera désigné dans la suite par la référence CCL ou commutateur de contrôle local. On va maintenant décrire le principe de fonctionnement du dispositif 200 conforme à la version préférée de l'invention qui vient d'être présentée.

On distingue deux modes de fonctionnement suivant la position du commutateur de contrôle local CCL.

Mode a) : le commutateur CCL est en position ouverte : les premier et second commutateurs de contrôle de ligne 54, 55 sont en position de contacts "basse", à savoir, les paires respectives de pôles 541, 542 et 551, 552 des premier et second commutateurs de contrôle de ligne 54, 55 sont en contact électrique ; les premier et second commutateurs de contrôle local 41, 44 sont en circuit ouvert.

Mode b) : le commutateur CCL est en position fermée : les premier et second commutateurs de contrôle de ligne 54, 55 sont en position de contacts "haute", à savoir les paires respectives de pôles 543, 544 et 553, 554 des premier et second commutateurs de contrôle de ligne 54, 55. Les premier et second commutateurs de contrôle local 41, 44 sont en position fermée.

Le mode a) équivaut au mode de fonctionnement décrit précédemment en référence à la figure 1. En effet, dans ce mode, les sorties des premier et second modules de détection et d'extraction 4, 5 sont respectivement reliées aux premières entrées des première et seconde portes logiques d'ouverture sélective 8, 9. En outre, les premier et second commutateurs de port 42, 43 sont inopérants quel que soit leur état du fait que les deux premier et second commutateurs de contrôle local 41, 44 sont en position ouverte. Par ailleurs, les premier et second commutateurs d'interruption 56, 57 sont eux aussi inopérants du fait que les quatrièmes pôles des premier et second commutateurs de contrôle de ligne 54, 57 ne sont pas reliés aux troisièmes pôles desdits commutateurs de contrôle de ligne 54, 57. Donc, les première et seconde portes logiques OU de sélection 50, 51 ont une simple fonction de portes suiveuses. Il en est de même pour les première et seconde portes logiques OU de contrôle 52, 51. On retrouve alors le circuit électrique équivalent à celui du dispositif 1 selon une première forme de réalisation de l'invention et, bien sûr, un principe de fonctionnement équivalent.

Dans le mode b) (commutateur CCL en position fermée), plusieurs situations doivent aussi être envisagées.

En premier lieu, si le commutateur de déplacement 40 est ouvert, le dispositif de transmission est bloqué dans les deux sens de transmission. Dans le cas particulier de l'application d'un tel dispositif à un système de transmission de commande d'ouverture de porte dans une rame de transport ferroviaire, le commutateur de déplacement 40 est en position ouverte lorsque la rame de transport est en déplacement, ce qui a pour effet, d'éviter toute commande intempestive d'ouverture des portes.

Si le commutateur de déplacement 40 est en position fermée, l'opérateur local, par exemple un contrôleur de train, peut agir soit sur l'un des deux commutateurs de sélection de port 42, 43, soit sur les deux ensembles, dans le but de transmettre un ordre, soit vers les autres dispositifs de transmission du côté du port 2, soit vers les autres dispositifs de transmission du côté du port 3, soit de part et d'autre du dispositif de transmission 200 à partir duquel la commande locale est effectuée.

Envisageons, à titre d'exemple non limitatif, l'hypothèse d'une commande locale à destination des dispositifs reliés au port 2. Cette commande est effectuée en agissant sur le premier commutateur de sélection de port 42. La fermeture de ce commutateur a pour effet de soumettre la troisième entrée de la première porte logique ou de sélection 50 à un niveau logique 1, si on admet que la différence de potentiel entre la source de tension continue +V et la source de tension continue -V correspond précisément à un niveau logique 1 dans le contexte électrique du dispositif 200 étudié ici. La fermeture des troisième et quatrième pôles 423, 423 plaçent ladite troisième entrée au potentiel +V, et la fermeture des premier et second pôles 421, 422 plaçent le module d'oscillation et d'amplification 46 et donc, les portes logiques de blocage sélectif 48 et de sélection 50, qui sont reliées directement et indirectement, à un niveau de tension de référence bas égal à la valeur de la tension continue -V.

Or, la première entrée du premier commutateur de sélection 50 présente initialement un niveau logique 0, si on suppose qu'à cet instant, aucun signal porteur n'est détecté sur le second port 3.

De plus, la seconde entrée du premier commutateur de sélection 50 présente aussi un niveau logique 0 du fait de la mise hors circuit du quatrième pôle 544 du premier commutateur de contrôle de ligne 54.

La porte logique OU de sélection 50 présente donc en sortie un niveau logique 1 qui est appliqué à la première entrée de la première porte logique ET de blocage sélectif 48 dont la seconde entrée est reliée à la sortie de la première porte logique d'ouverture sélective 8 à travers l'inverseur logique 10. Or, la sortie de la porte logique 8 est initialement au niveau logique 0 (absence de transmission en cours).

Donc, les deux entrées de la porte logique ET de blocage sélectif 48 étant toutes deux au niveau logique 1, un niveau logique 1 de sortie est appliqué au premier module d'oscillation et d'amplification 46, ce qui conduit en définitive à l'envoi d'une commande sur le port 2, à travers le transformateur de couplage 14.

La présence d'un signal porteur sur le port 2 est immédiatement détectée par le premier module de détection et d'extraction 4 qui émet alors un niveau logique 1 à l'entrée du premier commutateur de contrôle de ligne 54. Ce niveau logique 1 est transmis à la deuxième entrée de la première porte logique ou de sélection 50, via les pôles 543, 544 en contact électrique et les pôles 561, 562 eux aussi en contact électrique. Ceci a pour effet d'assurer un auto-maintien de la transmission de l'ordre sur le port 2, et de permettre de relâcher le commutateur de sélection de port 42. L'auto-maintien est rompu par une action sur le premier commutateur d'interruption 56, ce qui a pour effet de ramener la seconde entrée de la première porte logique OU de sélection 50 à un niveau 0 et de supprimer par conséquent toute transmission d'un signal porteur à partir du port 2.

La description du principe de fonctionnement d'une commande locale vers le port 2, qui vient d'être faite, peut évidemment être facilement transposée à une commande locale vers le port 3 par le second commutateur de sélection de port 43.

En outre, les deux commandes locales peuvent être simultanées par action conjointe sur les deux commutateurs de sélection de port 42, 43.

Une application préférée des dispositifs conformes à l'invention concerne la transmission d'informations de fermeture de portes et de commandes d'ouverture de portes des voitures d'une rame de transport ferroviaire.

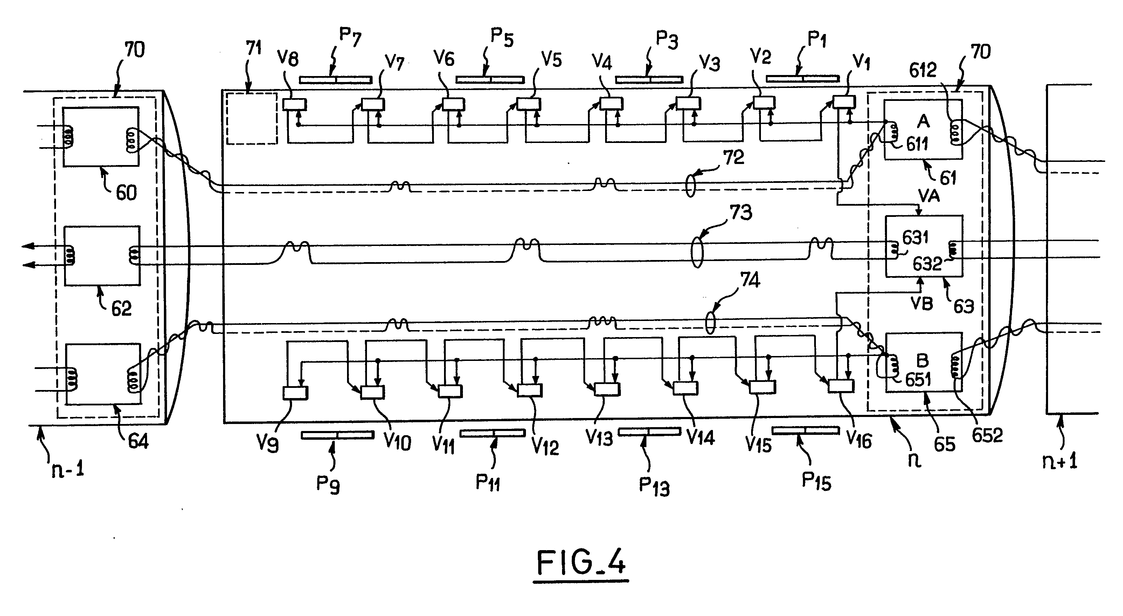

On considère, à titre d'exemple non limitatif, une voiture n au sein d'une rame comprenant N voitures parmi lesquelles une voiture n-1 et une voiture n, en référence à la figure 4. Supposons que le centre de décision d'ouverture et de fermeture des portes de la rame concernée se situe dans le poste de pilotage de la première voiture 1 (non représentée). Le pilote doit, d'une part, disposer d'une information de fermeture de la totalité des portes de la rame avant de démarrer celle-ci, et d'autre part, pouvoir transmettre à l'ensemble des voitures des ordres séparés ou conjoints d'ouverture des portes situées à gauche et des portes situées à droite, en se plaçant arbitrairement dans le référentiel du pilote de la rame orienté dans le sens normal de la marche.

Ainsi, l'information de fermeture des portes doit transiter de voiture en voiture, depuis la dernière voiture jusqu'à la première voiture. Lors de son passage dans une voiture donnée n, l'information de fermeture est susceptible d'être modifié si les capteurs de fermeture de la voiture n indiquent la non-fermeture d'au moins une porte de cette voiture.

Inversement, les commandes d'ouverture de porte transitent du poste de pilotage, situé par exemple dans la première voiture, vers les voitures suivantes, de proche en proche, jusqu'à la dernière voiture N.

Ainsi, dans une première forme de réalisation du système de transmission d'informations ou d'ordres conforme à l'invention, chaque voiture 1, ..., n-1, n, n + 1, ..., N comporte trois paires de lignes de transmission 72, 74, 73.

Une première paire de lignes 72 est destinée à la transmission des commandes d'ouverture des portes du côté droit, tandis qu'une seconde paire de lignes 74 est destinée à la transmission des commandes d'ouverture des portes du côté gauche.

Une troisième paire de lignes 73 assure la transmission des informations de fermeture de portes.

Chaque voiture n comprend en outre un premier et un second dispositifs de transmission d'ordre 61, 62, de structure semblable à celle du dispositif conforme à l'invention illustré par la figure 4. La disposition et les connexions respectives des premier et second dispositifs 61, 62 étant parfaitement symétrique, on se limitera, pour la clarté de la description, à l'exemple du premier dispositif de transmission d'ordre 61.

Dans l'exemple de la voiture n illustré schématiquement à la figure, chaque côté est respectivement muni de quatre portes P1, P3, P5, P7 ; P9, P11, P13, P15 composées chacune de deux ventaux V1 à V16.

A chaque ventail, est associé de façon très schématique un système de commande et de contrôle, V1 - V8, comportant un actionneur d'ouverture et un capteur de fermeture, l'ensemble des actionneurs d'ouverture étant relié en parallèle et l'ensemble des capteurs de fermeture étant relié en série.

Le dispositif de transmission d'ordre 61 est relié, d'une part, par son premier port 611, à une première extrémité de la première paire de lignes de transmission 72, et d'autre part, par son second port 612 à une seconde extrémité d'une première paire de ligne de transmission assurant la liaison entre la voiture n et la voiture n + 1 immédiatement suivante. Par ailleurs, la première extrémité de la première paire de lignes 72 est aussi reliée aux différents actionneurs d'ouverture, au niveau du premier port 611.

Grâce à l'emploi du dispositif de transmission 61 conforme à l'invention, la transmission est totalement réversible, permettant ainsi de relayer la commande d'ouverture, soit de la première voiture vers la dernière voiture N, soit de la dernière voiture N vers la première voiture.

La description qui vient d'être faite s'applique également au second dispositif de transmission d'ordre 65.

Un troisième dispositif de transmission d'informations 63 semblable à celui illustré à la figure 2 est prévu afin de relayer sélectivement une information de fermeture de portes transmise sur la paire de lignes 73.

Cette information, initialement émise à partir de la dernière voiture N, est relayée de proche en proche et bloquée dès que, dans une voiture n, les capteurs de fermeture de portes indiquent qu'au moins un ventail de la voiture n est ouvert. Le dispositif de transmission d'ordres 63 dont un premier port 631 est relié à une première extrémité de la troisième paire de lignes 73 et un second port 632 est relié à une première extrémité d'une troisième paire de lignes de la voiture suivante n + 1, comporte deux entrées VA, VB, reliées respectivement à la première suite de capteurs de fermeture reliés en série et à la seconde suite de capteurs de fermeture reliés en série.

Si on suppose, à titre d'exemple non limitatif, qu'un niveau logique 1 correspond à la fermeture de la totalité des ventaux alors qu'un niveau logique 0 signifie qu'au moins un des ventaux n'est pas fermé, il faut le conjonction de deux niveaux logiques 1, 1 aux entrées VA et VB du dispositif de transmission 63 pour qu'un niveau logique 1 présent sur le second port 632 puisse être relayé sur le premier port 631 et sur la paire de lignes 73. Si au moins l'une des deux entrées VA, VB présente un niveau logique 0, le dispositif de transmission 63 bloque l'information de fermeture provenant de la voiture n + 1.

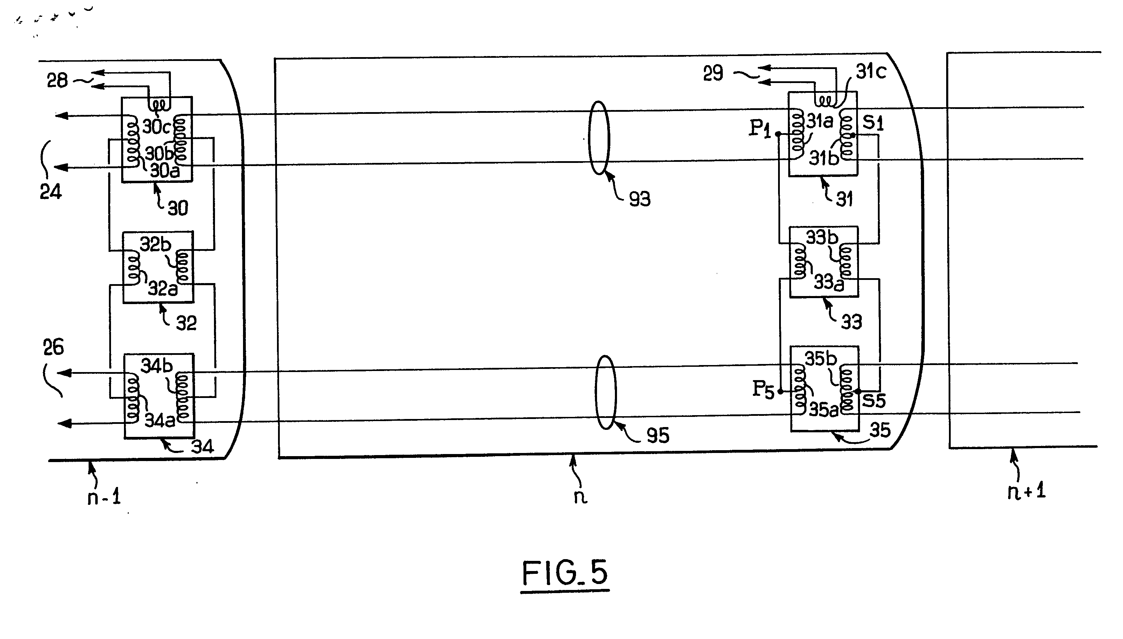

Dans une autre forme de réalisation du système de transmissions ou d'ordres conforme à l'invention, deux première et seconde paires de lignes de transmission 93, 95 sont prévues au lieu de trois dans la première forme de réalisation précitée. Chaque paire de ligne transmet à la fois des ordres d'ouverture de portes et des informations de fermeture de porte, en référence à la figure 5. On réalise ainsi une ligne "fantôme" équilibrée sur les deux paires de lignes de commande d'ouverture à droite et à gauche. Dans la voiture n, la première paire de lignes 93 est reliée à un premier port 31a du premier dispositif de transmission 31 dont le second port 31b est relié à une première paire de lignes de la voiture suivante n + 1. De la même façon, la seconde paire de lignes 95 est reliée à un premier port 35a du second dispositif de transmission 35 dont le second port 35b est relié à une seconde paire de lignes de la voiture suivante n + 1. Les enroulements primaires des premiers ports 31a, 35a sont munis respectivement de bornes de points-milieux primaires P1, P5, tandis que les enroulements secondaires des seconds ports 31b, 35b sont munis de bornes de points-milieux secondaires S1, S5.

Le système de transmission conforme à l'invention comprend en outre un troisième dispositif de transmission d'information 33 conforme à l'invention et semblable à celui illustré à la figure 1, comportant un premier port 33a dont une borne est reliée au premier point-milieu primaire P1 et l'autre est reliée au second point-milieu primaire P5, et un second port 33b dont une borne est reliée au premier point milieu secondaire S1 et l'autre au second point-milieu secondaire S2.

Les voitures voisines sont toutes équipées de dispositifs de transmission semblables. Ainsi, les dispositifs de transmission équipant la voiture n - 1 sont représentés sur la figure 5.

Les premier et second dispositifs de transmission d'ordres 30, 34 de la voiture n - 1 sont respectivement reliés aux premier et second dispositifs de transmission d'ordres 31, 35 de la voiture, les enroulements secondaires 30b, 34b de la voiture n - 1 étant reliés aux enroulements primaires 31a, 35a.

L'ensemble des composants équipant les différents moyens mis en oeuvre dans les dispositifs de transmission conformes à l'invention doit de préférence être de type "à sécurité intrinsèque", à savoir que les composants doivent présenter une structure interne telle qu'en cas de défaillance quelle qu'elle soit, ils ne soient pas en mesure de délivrer une information ou un ordre intempestif.

Les dispositifs de transmission conformes à l'invention appliqués aux rames de transport ferroviaire apportent un haut niveau de sécurité pour les voyageurs : en effet, avec ces dispositifs aucun ordre intempestif d'ouverture de portes ne peut être transmis alors que la rame est en mouvement, et qu'aucune information erronée de fermeture de porte ne peut être transmise au moment du démarrage de la rame.

Bien entendu, l'invention n'est pas limitée aux exemples décrits et représentés et de nombreux aménagements peuvent être apportés à ces exemples sans sortir du cadre de l'invention.

On peut ainsi envisager l'application des dispositifs de transmission conformes à l'invention à d'autres types de transport ou à des applications industrielles où le relayage d'informations et d'ordres avec un haut niveau de sécurité est vital.

Par ailleurs, il est possible d'utiliser toute technologie connue de porte logique pour la réalisation des dispositifs conformes à l'invention, pour peu qu'elle satisfasse aux conditions de sécurité intrinsèque évoquées précédemment.

En outre, les paires de lignes reliant les dispositifs de transmission conformes à l'invention peuvent être agencées pratiquement sous forme de câble coaxial ou de liaison HF.

**Revendications**

1. Procédé de transmission d'informations ou d'ordres, en mode duplex alterné entre un premier port (2) relié à une première paire de lignes de transmission et un second port (3) relié à une seconde paire de lignes de transmission, comprenant :
A) une étape de détection et de traitement d'informations à l'entrée d'un quelconque desdits ports, désigné alors comme port d'entrée, l'autre port étant désigné comme port de sortie, suivie
B) d'une étape de blocage de transmission de signaux éventuels issus du port de sortie vers le port d'entrée,
C) une étape de transmission desdites informations du port d'entrée vers le port de sortie, tant que des informations sont détectées en entrée du port d'entrée, et suivie dans le cas contraire,
D) d'une étape de blocage de transmission de tous signaux éventuels issus du port d'entrée vers le port de sortie, conduisant de nouveau à l'étape A), caractérisé en ce que les informations présentées à l'un quelconque desdits ports sont sous la forme d'une modulation en amplitude d'un signal porteur alternatif de fréquence porteuse prédéterminée, et en ce que l'étape A) de détection et de traitement comporte une étape d'identification de la fréquence porteuse prédéterminée et un étape d'extraction d'un signal représentatif desdites informations à transmettre.

2. Procédé selon la revendication 1, caractérisé en ce que le signal utile est un signal logique, le signal porteur étant modulé de sorte qu'à chaque valeur (0, 1) du signal logique correspond un niveau d'amplitude prédéterminé du signal porteur.

3. Procédé de transmission conforme à la revendication 2, caractérisé en ce que ladite étape de transmission D) est conditionnée par le résultat d'une opération logique prédéterminée sur au moins une variable extérieure prédéterminée.

4. Procédé de transmission conforme à la revendication 2, caractérisé en ce que lesdites étapes A) à D) sont inhibées sélectivement par la mise en oeuvre éventuelle de moyens de contrôle prédéterminés (40, 41, 42, 43) et remplacées alors par les étapes suivantes :
E) une étape de sélection de l'un desdits premier et second ports ou des deux ensembles, comme ports de sortie, suivie d'
F) une étape de transmission d'une information prédéterminée par lesdits ports sélectionnés, interrompue sélectivement par action extérieure sur des moyens d'interruption (56, 57) et suivie alors,
G) d'une étape de blocage de toute transmission vers le ou lesdits ports sélectionnés dont le blocage a été demandé, conduisant à une nouvelle étape E) si lesdits moyens de contrôle local sont toujours activés, ou bien à ladite étape A) dans le cas contraire.

5. Procédé de transmission conforme à la revendication 3, caractérisé en ce que l'exécution des étapes E) et F) est en outre conditionnée par la satisfaction d'un test logique prédéterminé.

6. Dispositif (1, 100) de transmission d'informations (1) en mode duplex alterné entre un premier et un second ports (2, 3) mettant en oeuvre le procédé selon l'invention, comprenant
des moyens pour détecter et traiter des informations à l'entrée de l'un quelconque desdits ports (2, 3), désigné alors comme port d'entrée, l'autre port étant désigné comme port de sortie,
des moyens (12, 13) pour bloquer sélectivement toute transmission de signaux éventuels issus du port de sortie vers le port d'entrée, reliés aux moyens de détection et de traitement,
des moyens (8, 9) pour ouvrir sélectivement un chemin de transmission prédéterminé dudit port d'entrée vers ledit port de sortie, reliés auxdits moyens de blocage (12, 13),
des moyens (6, 7) pour transmettre lesdites informations vers ledit port de sortie, reliés d'une part auxdits moyens d'extraction et auxdits moyens d'ouverture (8, 9), et d'autre part audit port de sortie, lesdits moyens de détection et d'extraction (4, 5) coopérant avec lesdits moyens de blocage et d'ouverture sélectifs pour n'autoriser à tout instant qu'un sens de transmission entre lesdits premier et second ports (2, 3),
caractérisé en ce que les moyens de détection et de traitement comprennent des moyens d'identification d'une fréquence porteuse prédéterminée et des moyens pour extraire d'un signal alternatif à ladite fréquence porteuse prédéterminée en entrée du port d'entrée, un signal utile de modulation représentatif des informations à transmettre, chacun desdits ports étant relié à une paire de lignes de transmission.

7. Dispositif (100) conforme à la revendication 6, caractérisé en ce qu'il comprend en outre des moyens (30) pour commander la transmission d'informations dudit port d'entrée vers ledit port de sortie par lesdits moyens de blocage (12, 13) et par lesdits moyens d'ouverture (8, 9) en fonction de l'état d'au moins une variable extérieure prédéterminée appliquée en entrée desdits moyens de commande (30).

8. Dispositif (1, 100) conforme à l'une des revendications 6 ou 7, caractérisé en ce qu'il présente une disposition symétrique desdits moyens précités vis à vis desdits premier et second ports (2, 3), lesdits moyens précités se répartissant en deux premier et second groupes de moyens identiques attachés respectivement auxdits premier et second ports (2, 3) et comportant respectivement des premiers et seconds moyens d'extraction reliés respectivment auxdits premiers et seconds moyens de détection, des premiers et seconds moyens (12, 13) pour bloquer sélectivement des informations en provenance du port opposé, des premiers et seconds moyens (8, 9) pour ouvrir sélectivement un chemin de transmission reliés d'une part, respectivement auxdits premiers et seconds moyens d'extraction et, d'autre part, respectivement auxdits premiers et seconds moyens de blocage sélectif (12, 13), et des premiers et seconds moyens (6, 7) pour transmettre des informations en provenance du port opposé, reliés d'un part, respectivment auxdits premiers et seconds moyens de blocage (12, 13) et d'autre part, respectivement auxdits premier et second ports (2, 3), lesdits premiers et seconds moyens (8, 9) d'ouverture sélective desdits premier et second groupes étant respectivement reliés auxdit seconds et premiers moyens (13, 12) de blocage sélectif desdits second et premier groupes et auxdits seconds et premiers moyens (9, 8) d'ouverture sélective desdits second et premier groupes.

9. Dispositif conforme à l'une des revendications 6 à 8, caractérisé en ce que pour chacun desdits groupes, lesdits moyens de transmission (6, 7) comprennent des moyens d'oscillation, reliés auxdits moyens de blocage (12, 13), pour générer un signal électrique alternatif à ladite fréquence prédéterminée modulé par lesdites informations transmises, et des moyens pour amplifier ledit signal modulé reliés audit port.

10. Dispositif conforme à la revendication 9, caractérisé en ce que, pour chaque groupe, lesdits moyens de détection (4, 5) et lesdits moyens de transmission (6, 7) sont reliés audit port (2, 3) par un transformateur (14, 15) comportant un enroulement primaire (14a, 15a) relié audit port (2, 3) et deux enroulements secondaires (14b, 14c ; 15b, 15c) reliés, l'un auxdits moyens de détection et de traitement (4, 5) et l'autre auxdits moyens d'amplification (6, 7), et en ce que lesdits moyens de détection et de traitement (4, 5) comprennent en outre des moyens de bouclage de ligne.

11. Dispositif (1, 100) conforme à l'une des revendications 8 à 10, caractérisé en ce que lesdits premiers (8) et seconds (9) moyens d'ouverture sélective comprennent respectivement des première et seconde portes logiques d'ouverture présentant comme première et seconde entrées, d'une part, respectivement un signal logique issu desdits premiers et seconds moyens d'extraction et, d'autre part, respectivement, un signal logique issu desdites secondes et premières portes logiques d'ouverture via respectivement des premiers et seconds moyens inverseurs logiques d'entrée, et délivrant en sortie respectivement des premier et seconds signaux logiques de sortie appliqués, d'une part, respectivement, aux premiers (12) et seconds (13) moyens de blocage sélectif via respectivement des premiers (10) et seconds (11) moyens inverseurs logiques de sortie, et d'autre part, respectivement aux seconds (13) et premiers (12) moyens de blocage sélectif et respectivement aux seconde (9) et première (8) portes logiques d'ouverture via respectivement lesdits seconds et premiers moyens inverseurs logiques d'entrée.

12. Dispositif (1, 100) conforme à la revendication 11, caractérisé en ce que lesdits premiers (12) et seconds (13) moyens de blocage sélectif comprennent respectivement des première et seconde portes logiques de blocage présentant chacune en première et seconde entrées, d'une part, ledit signal logique issu respectivement desdits seconde (9) et première (8) portes logiques d'ouverture, et d'autre part, ledit signal logique délivré respectivement par lesdites première (8) et seconde (9) portes logiques d'ouverture via lesdits premiers (10) et seconds (11) moyens inverseurs logique de sortie, et délivrant sélectivement en sortie respectivement un premier signal et un second signal logiques d'information appliqués respectivment auxdits premiers (6) et seconds (7) moyens de transmission.

13. Dispositif conforme à la revendication 12, caractérisé en ce que lesdites première (8) et seconde (9) portes logiques d'ouverture et lesdites première (12) et seconde (13) portes logiques de blocage sont des opérateurs logiques ET.

14. Dispositif (100) conforme à la revendication 12 ou 7, caractérisé en ce que lesdits moyens de commande (30) de transmission comprennent des moyens opérateurs logiques de commande présentant en entrée lesdites variables extérieures, la sortie desdits moyens opérateurs logiques de commande étant reliée à une troisième entrée desdites première (22) et seconde (23) portes logiques de blocage.

15. Dispositif (200) conforme à la revendication 6 ou 7, caractérisé en ce qu'il comprend en outre des moyens de contrôle local (400), reliés respectivement auxdits premiers (80) et seconds (90) moyens d'ouverture sélective et auxdits premiers (88) et seconds (98) moyens de blocage sélectif, pour transmettre sélectivement une information prédéterminée vers au moins un desdits ports (2, 3), en inhibant simultanément toute transmission d'information d'un desdits ports vers l'autre port, des premiers et seconds moyens de contrôle de ligne (54, 55), reliés, d'une part, respectivement auxdits premiers (80) et seconds (90) moyens d'ouverture sélective, synchronisés avec lesdits moyens (400) de contrôle local, des premiers et seconds moyens de sélection de port (42, 43), reliés d'une part auxdits moyens de contrôle local (400) et, d'autre part, respectivement auxdits premiers (88) et seconds (98) moyens de blocage sélectif ∶t auxdits premiers (80) et seconds (90) moyens d'ouverture sélective, et des premiers (56) et seconds (57) moyens d'interruption, reliés d'une part, respectivement auxdits premiers (54) et seconds (55) moyens de contrôle de ligne et, d'autre part, auxdits premiers (88) et seconds (98) moyens de blocage sélectif.

16. Dispositif conforme à la revendications 15 ou 12, caractérisé en ce que lesdits premiers (80) et seconds (90) moyens d'ouverture sélective comprennent en outre respectivement une première (52) et une seconde (53) portes logiques de contrôle comportant chacune une première entrée de contrôle reliée respectivement auxdits premiers (54) et seconds (55) moyens de contrôle de ligne et respectivement auxdits premiers (56) et seconds (57) moyens d'interruption, une seconde entrée de contrôle reliée respectivement à la sortie desdits seconde (9) et première (8) portes logiques d'ouverture, une troisième entrée de contrôle reliée respectivement auxdits premiers (42) et seconds (43) moyens de sélection de port, et une sortie reliée respectivement aux entrées desdits premiers et seconds moyens inverseurs logiques d'entrée et en ce que lesdits premiers (88) et seconds (98) moyens de blocage sélectif comprennent en outre respectivement une première (50) et une seconde (51) portes logiques de sélection, comportant chacune :
- une première entrée de sélection, reliée respectivement à ladite seconde entrée de contrôle, desdites première (52) et seconde (53) portes logiques de contrôle,
- une seconde entrée de sélection, reliée respectivement auxdits premiers (56) et seconds (57) moyens d'interruption,
- une troisième entrée de sélection reliée à ladite troisième entrée de contrôle,
- et une sortie reliée respectivement auxdites premières entrées desdites première (48) et seconde (49) portes logiques de blocage.

17. Dispositif (200) conforme à la revendication 16 ou 13, caractérisé en ce que lesdites première (52) et seconde (53) portes logiques de contrôle et lesdites première (50) et seconde (51) portes logiques de sélection sont des opérateurs logiques OU.

18. Dispositif (200) conforme à l'une des revendications 16 à 17, caractérisé en ce que lesdits premiers (54) et seconds (55) moyens de contrôles de ligne sont respectivement constitués d'un premier et d'un second commutateurs de contrôle de ligne (541, 551), de fonctionnement synchronisé, comportant quatre pôles et présentant deux états possibles,
- le premier état correspondant à la mise en court-circuit d'une premier et d'un second pôles (542, 552), les deux autres pôles étant non reliés électriquement,
- le second état correspondant à la mise en court-circuit du troisième (543, 553) et du quatrième (544, 554) pôles, les premier et second pôles étant alors non reliés électriquement, et en ce que les premiers (541, 551) pôles desdits premier (54) et second (55) commutateurs de contrôle de ligne sont respectivement reliés auxdits premiers (4) et seconds (5) moyens d'extraction de signal,
- les seconds (542, 552) pôles desdits premier (54) et second (55) commutateurs de contrôle de ligne sont respectivement reliés aux premières entrées desdites première (8) et secondes (9) portes logiques d'ouverture,
- les troisièmes (543, 553) pôles desdits premier (54) et second (55) commutateurs de contrôle de ligne sont respectivement reliés auxdits premiers pôles (541, 551),
- les quatrièmes (544, 554) pôles desdits premier (54) et second (55) commutateurs de contrôle de ligne sont respectivement reliés à une première borne (561, 571) desdits premiers (56) et seconds (57) moyens d'interruption et à la première entrées desdites première (52) et seconde (53) portes logiques de contrôle.

19. Dispositif (200) conforme à la revendication 18, caractérisé en ce que lesdits premiers et seconds moyens de sélection de port comprennent respectivement un premier et un second commutateurs de sélection comportant quatre pôles et présentant deux états possibles de commutation,
- le premier état correspondant d'une part au contact électrique entre un premier (421, 431) et un second (422, 432) pôles et d'autre part, au contact électrique entre un troisième (423, 433) et un quatrième (424, 434) pôles,
- le second état correspondant à l'absence de contact électrique, d'une part entre lesdits premier (421, 431) et second (422, 432) pôles, et d'autre part, entre lesdits troisième (423, 433) et quatrième (424, 434) pôles et en ce que :
- les premiers (421, 431) pôles desdits premier (42) et second (43) commutateurs de sélection sont respectivement reliés auxdits premiers et seconds moyens de transmission (46, 47),
- les seconds (422, 432) pôles sont respectivement reliés entre eux et à une première borne (401) desdits moyens de contrôle local (400),
- les troisièmes (423, 433) pôles sont respectivement reliés auxdites troisièmes entrées desdites première (50) et seconde (51) portes logiques de sélection,
- les quatrièmes pôles sont respectivement reliés entre eux et à une second borne (402) desdits moyens de contrôle local (40).

20. Dispositif (200) conforme à la revendication 19, caractérisé en ce que lesdits moyens de contrôle local (400) comprennent en outre :
- un commutateur de déplacement (40), indiquant un état logique d'un capteur extérieur prédéterminé, dont un premier pôle est relié à une première source de tension continue prédéterminée (+V),
- un premier commutateur (41) bipolaire de contrôle local dont un premier pôle est relié à un second pôle dudit commutateur bipolaire de déplacement (40), et dont un second pôle est relié à ladite seconde borne (402) desdits moyens de contrôle local,
- un second commutateur de contrôle local (44), bipolaire, dont un premier pôle est relié à ladite première borne (401) desdits moyens de contrôle local et dont un second pôle est relié à une seconde source de tension continue prédéterminée (-V), lesdits premier et second commutateurs de contrôle local (41, 44) présentant un fonctionnement synchrone avec celui desdits premier et second commutateurs de contrôle de ligne (54, 55).

21. Dispositif de transmission conforme à l'une des revendications 6 à 20, caractérisé en ce que lesdits premiers et seconds moyens de détection, d'extraction (4, 5), d'ouverture sélective (8, 9 ; 80, 90) de blocage sélectif (12, 13 ; 88, 98), et de transmission (6, 7 ; 46, 47) comprennent des composants à sécurité intrinsèque.

22. Système de transmission d'informations ou d'ordres dans une rame de transport ferroviaire constitué de plusieurs voitures (n, n-1, n+1) mettant en oeuvre des dispositifs de transmission (60, 65) conformes aux revendications précédentes, comprenant, dans chaque voiture (n)
- une première paire de lignes de transmission (72), pour transmettre de proche en proche, un premier ordre d'ouverture d'un premier groupe de portes P1, P3, P5, P7),
- une deuxième paire de lignes de transmission (74), pour transmettre de proche en proche, un second ordre d'ouverture d'un second groupe de portes (P9, P11, P13, P15),

- une troisième paire de lignes de transmission (73) pour transmettre de proche en proche, une information de fermeture des portes de voitures de la rame situées dans une direction prédéterminée par rapport à ladite voiture, caractérisé en ce qu'il comprend en outre :
- un premier et un second dispositifs de transmission d'ordre (61, 65) conformes à l'une des revendications 15 à 21 dont lesdits premiers ports (611, 651) sont reliés respectivement d'une part, à une première extrémité de ladite première paire (72) de lignes et à une première extrémité de ladite seconde paire (74) de lignes, et, d'autre part, à des moyens d'ouverture de porte (V1-V16) associés à chaque porte appartenant respectivement auxdits premier et second groupes de portes, et dont lesdits seconds ports (512, 652) sont reliés respectivement à des secondes extrémités des première et seconde paires de lignes de transmission de la voiture adjacente immédiatement voisine à ladite voiture, du côté desdits seconds ports,
- et un troisième dispositif de transmission d'information (63) conforme aux revendications 7 et 21 et à l'une des revendications 8 à 14, dont ledit premier port (631) est relié à une première extrémité de ladite troisième (73) paire de lignes de transmission et dont ledit second port (632) est relié à une seconde extrémité de la troisième paire de lignes de transmission de la voiture adjacente à ladite voiture du côté dudit second port, lesdites variables extérieures comprenant une première variable (VA) indicative de la fermeture des portes dudit premier groupe de portes et une seconde variable (VB) indicatives de la fermeture des portes dudit second groupe de porte, et étant fournies auxdits moyens de commande, respectivement par une première et une seconde suites de capteurs de fermeture de portes reliés en série.

23. Système de transmission d'informations dans une rame de transport ferroviaire constituée de plusieurs voitures (n-1, n, n+1), mettant en oeuvre des dispositifs de transmission conformes aux revendications prédédentes comprenant dans chaque voiture (n),
- une première paire de lignes de transmission (93), pour transmettre de proche en proche un premier ordre d'ouverture d'un premier groupe de portes,
- une deuxième paire de lignes de transmission (95), pour transmettre de proche en proche un second ordre d'ouverture d'un second groupe de portes, caractérisé en ce qu'il comprend en outre,
- un premier (31) et un second (35) dispositifs e transmission d'ordres conformes à l'une des revendications 15 à 21, lesdits premier et second dispositifs comportant en outre des enroulements primaires (31a, 35a) de transformateur munis respectivement de premier et second points-milieux secondaires (S1, S5) lesdits premiers ports desdits premier (31) et second (35) dispositifs étant reliés respectivement à des premières extrémités desdites première (93) et seconde (95) paires de lignes, lesdits seconds ports desdits premier (31) et second (35) dispositifs étant reliés respectivement à des secondes extrémités des première (93) et seconde (95) paires de lignes de la voiture voisine (n + 1) du côté desdits seconds ports,
- un troisième dispositif de transmission (33) conforme à l'une des revendications 8 à 14 et à la revendication 21, dont ledit premier port présente une première borne reliée audit premier point-milieu primaire (P1) et une seconde borne reliée audit second point-milieu primaire (P5), et dont ledit second port présente une première borne reliée audit premier point-milieu secondaire (S1) et une seconde borne reliée audit second point-milieu secondaire (S5).

24. Système de transmission conforme à l'une des revendications 22 ou 23, caractérisé en ce que lesdits dispositifs de transmission sont situés dans une cabine de pilotage (70) de ladite voiture (n).

FIG_1

EP 0 381 565 A1

FIG_2

EP 0 381 565 A1

FIG_3

FIG_4

EP 0 381 565 A1

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-4 154 978 (TU)<br>* Colonne 2, lignes 28-40; colonne 3, lignes 16-30; colonne 4, lignes 5-9; colonne 9, lignes 53-57; figures 1,5 *<br>--- | 1,3,4,7 -24 | H 04 L 5/14 |
| A,D | US-A-4 577 327 (NAMBU)<br>* Colonne 2, lignes 31-41; colonne 5, lignes 42-47; figure 6 *<br>--- | 1,7-24 | |
| A,D | EP-A-0 025 483 (IBM)<br>* Page 1, lignes 24-27; page 2, lignes 1-4; figure 1 *<br>--- | 1-24 | |
| A | PATENT ABSTRACTS OF JAPAN, vol. 9, no. 318 (E-366)[2041], 13 décembre 1985, page 135 E 366; & JP-A-60 152 153 (SEIICHI MIYAZAKI) 10-08-1985<br>* Résumé *<br>----- | 1-24 | |

**DOMAINES TECHNIQUES RECHERCHES (Int. Cl.5)**

H 04 L

Le présent rapport a été établi pour toutes les revendications

| Lieu de la recherche | Date d'achèvement de la recherche | Examinateur |
|---|---|---|
| LA HAYE | 10-05-1990 | CRETAINE P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)